# EUROPÄISCHE PATENTANMELDUNG

(11) **EP 0 911 710 A2**
(43) Veröffentlichungstag der Anmeldung: **28.04.1999**
(21) Anmeldenummer: 98119787.4
(22) Anmeldetag: 22.10.1998
(51) Int. Cl.: G05B 19/12

(54) **Verfahren zum Behandeln von textilen Produkten durch Haushaltgeräte**

(30) Priorität: 24.10.1997 DE 19747150
(71) Anmelder: BSH Bosch und Siemens Hausgeräte GmbH, 81669 München (DE)
(72) Erfinder: Moschütz, Harald, Dipl.-Ing., 14979 Grossbeeren (DE)

(57) **Zusammenfassung**

Die textilen Produkte (1) sind mit maschinenlesbaren Transpondern (2), die mit einem elektronischen Schaltkreis versehen sind, der Informationen über das textile Produkt (1) enthält, und die Haushaltgeräte (3) mit einer Vorrichtung (5) zum Auslesen dieser Informationen ausgerüstet. Diese Vorrichtung kann die Informationen über alle zu waschenden oder zu trocknenden textilen Produkte (1) aus den jeweiligen Transpondern (2) auslesen. Anhand dieser Informationen wird dann geprüft ob ein Wasch- oder Trockenprogramm zur optimalen Behandlung aller textilen Produkte (1) ausgewählt werden kann. In diesem Fall wird das entsprechende Programm ausgewählt und der Wasch- oder Trockenvorgang gestartet; andernfalls erfolgt eine Warnung an den Benutzer. So können Bedienungsfehler bei der Wahl des optimalen Programms zum Waschen und/oder Trocknen von textilen Produkten (1) vermieden werden. Darüber hinaus werden ungünstige Zuzammenstellungen von zu waschenden oder zu trocknenden textilen Produkten (1) erkannt.

## Beschreibung

Die vorliegende Erfindung betrifft ein Verfahren zum Behandeln von textilen Produkten durch Haushaltgeräte.

Zur Wäschebehandlung gehören Prozesse wie Waschen, Trocknen, Bügeln, Mangeln und Glätten. Das Trocknen und insbesondere das Waschen aber auch die anderen Behandlungsprozesse sind Vorgänge, die auf die zu behandelnden textilen Produkte individuell abgestimmt werden müssen, um optimale Ergebnisse zu erzielen. Eine falsche Behandlungsart, die mit Hilfe von Behandlungsprogrammen eingestellt wird, kann die behandelten textilen Produkte sogar beschädigen oder unbrauchbar machen. Das optimale Programm zum Behandeln eines textilen Produktes hängt insbesondere von den verschiedenen Materialeigenschaften seines Gewebes ab, wie beispielsweise von der Stoffart (Baumwolle, Wolle...), der Farbe oder der maximal zuträglichen Behandlungstemperatur. Jedoch werden textile Produkte in der Regel nicht einzeln gewaschen und/oder getrocknet, sondern zu sogenannten Wäscheposten zusammengefaßt, die in einem Wasch- beziehungsweise Trockenvorgang gemeinsam behandelt werden. Da dieser Vorgang für alle textilen Produkte des Postens gleich ist, muß bei der Zusammenstellung eines Wäschepostens darauf geachtet werden, daß eine für alle textilen Produkte optimale Programmwahl getroffen werden kann. Insbesondere in Bezug auf die Farben können sich verschiedenartige Wäschestücke auch gegenseitig beeinflussen. So können sehr stark gefärbte Wäschestücke beim Waschen etwas Farbe an die Waschlauge abgeben, die von den anderen Wäschestücken aufgenommen werden und insbesondere bei weißen Wäschestücken zu Verfärbungen führen kann. Somit müssen neben der optimalen Abstimmung des Pflegeprogrammes auf die einzelnen zu behandelnden textilen Produkte auch die Unterschiede unter ihnen berücksichtigt werden, um ein optimales Pflegeergebnis zu erzielen.

Neben einer optimalen Textilpflege ist man aber auch bemüht, aus ökologischen und ökonomischen Gesichtspunkten möglichst wenig Energie, Wasser oder Waschmittel zu verbrauchen. Zu diesem Zweck kann bei nahezu allen heutigen Wasch- oder Trockengeräten die Wasser- oder Waschmittelzugabe entsprechend der Menge der zu behandelnden Wäsche dosiert werden.

Das optimale Behandeln von textilen Produkten erfordert somit umfangreiches Wissen über die Eigenschaffen der textilen Produkte und deren optimale Pflege, über die Bedienung der entsprechenden Geräte sowie über die einzusetzenden Waschmittel. Aufgrund des großen technischen Fortschrittes auf all diesen Gebieten wird es für einen Laien, der sich mit der Textilpflege im Haushalt beschäftigt, immer schwieriger, den Behandlungsvorgang von textilen Produkten optimal durchzuführen.

Zur Vereinfachung dieser Prozesse werden seit längerem Pflegekennzeichen verwendet, die als kleine bestickte oder bedruckte Gewebestücke unauffällig an textilen Produkten angebracht sind und Angaben über das textile Produkt sowie über dessen optimale Pflege enthalten. Diese Pflegekennzeichen müssen bislang vom Benutzer gelesen werden, der dann entsprechend den Angaben über die verschiedenen zu behandelnden textilen Produkte das optimale Programm zum Waschen und/oder Trocknen bzw. die optimalen Einstellungen am Behandlungsgerät (Temperatur, Walzengeschwindigkeit, Preßdruck etc.) eingestellt hat. Damit war es zwar möglich, Angaben über die Eigenschaften des textilen Produktes und einige Pflegeempfehlungen zu erhalten; die Zusammenstellung des Wäschepostens und die richtige Auswahl des Pflegeprogramms bzw. der Pflegeparameter blieben jedoch nach wie vor dem Benutzer überlassen.

Aus der DE 41 42 463 A1 ist ein Haushaltgerät zur automatischen Behandlung von Wäsche bekannt, in dem sich ein Sensor befindet und das zu behandelnde textile Produkt eine maschinenlesbare Marke trägt, wobei der Sensor die gelesenen Signale einer Logik zuführt, die das Haushaltgerät steuert. In dieser Druckschrift ist der Sensor als optoelektronisches oder akustoelektronisches Lesegerät ausgebildet, wobei die maschinenlesbare Marke insbesondere in Form eines Strichcodes am zu behandelnden Produkt angebracht ist. Bei dieser Art der Informationsübertragung von der maschinenlesbaren Marke zum Haushaltgerät muß entweder die Marke am Sensor des Haushaltgerätes vorbeigeführt werden oder ein Sensor, der über ein flexibles Kabel mit dem Haushaltgerät verbunden ist, über die Marke geführt werden. Neben der Bedienungsunfreundlichkeit eines solchen Verfahrens zur Informationsübertragung weisen optische oder akustische Verfahren eine hohe Störanfälligkeit auf und sind nicht geeignet, über einen längeren Zeitraum brauchbare Ergebnisse zu liefern, da sich beispielsweise optische Marken leicht abnützen.

Der vorliegenden Erfindung liegt deshalb die Aufgabe zugrunde, ein Verfahren zum Behandeln von textilen Produkten durch Haushaltgeräte zu schaffen, mit dem die Eigenschaften der zu behandelnden Produkte sicher erfaßt werden können und der Behandlungsvorgang optimal auf die textilen Produkte abgestimmt werden kann.

Diese Aufgabe wird durch die Merkmale des Anspruchs 1 gelöst.

Erfindungsgemäß wird ein Verfahren zum Behandeln von textilen Produkten durch Haushaltgeräte vorgeschlagen, wobei die textilen Produkte mit wenigstens einem maschinenlesbaren Transponder mit wenigstens einem elektronischen Schaltkreis versehen sind, der Informationen über das textile Produkt enthält, und wobei die Haushaltgeräte mit wenigstens einer Vorrichtung zum Auslesen der Informationen über das textile Produkt ausgerüstet sind. Das Verfahren weist weiterhin die folgenden Schritte auf:
- Einlesen der Informationen aus dem wenigstens einen Transponder der zu behandelnden textilen Produkte mittels der wenigstens einen Auslesevorrichtung in ein Haushaltgerät,
- Bestimmung der weiteren Behandlung der textilen Produkte entsprechend der eingelesenen Informationen durch das Haushaltgerät.

Auf diese Weise ist es möglich, die Informationen über die zu behandelnden textilen Produkte sicher zum Haushaltgerät zu übertragen und den Behandlungsvorgang optimal darauf abzustimmen. Da Transponder die Information von sich aus aussenden, muß der Benutzer sich nicht um des Einlesen der Informationen kümmern; diese werden automatisch zum Haushaltgerät übertragen. Dieses kann dann von sich aus die Behandlung der textilen Produkte festlegen und gegebenenfalls optimale Dosiermengen von Wasser und den gegebenenfalls verschiedenen Wasch- und Pflegemitteln einstellen oder durch eine geeignete Anzeigeeinrichtung Empfehlungen für die händische Einstellung dieser und weiterer Parameter geben.

Wenn die Zusammensetzung des Wäschepostens eine optimale Behandlung zuläßt, wählt das Haushaltgerät die richtigen Parameter der Behandlung, d. h. das optimale Pflegeprogramm. So können beispielsweise die optimale Temperatur, die Wasch- oder Trockendauer, die geeignete Dosierung von Wasser und von verschiedenen Waschmitteln sowie Walzengeschwindigkeit oder Preßdruck (bei Mangeln oder Bügelpressen) ausgewählt werden. Daneben können auch Einschränkungen bei der Pflege berücksichtigt werden, wenn beispielsweise ein Textilstück nicht geschleudert werden darf oder besonders schonend behandelt werden muß.

Eine Programmauswahl erfolgt sinnvollerweise unter Berücksichtigung der Eigenschaften des empfindlichsten Wäschestücks im Wäscheposten. Wenn aber gemäß den ausgelesenen Informationen über die zu behandelnden textilen Produkte eine optimale Behandlung für eine Mehrzahl von Produkten dieses Postens nicht möglich ist, erfolgt vorteilhafterweise eine Warnung an den Benutzer, der dann die Zusammensetzung des Wäschepostens, gegebenenfalls nach Vorgaben des Haushaltgerätes, ändern kann. So ist es möglich, eine aufgrund der ausgewählten Behandlung ungünstige Postenzusammenstellung oder eine Unter- oder Überbeladung anzuzeigen und damit eine Behandlung zu verhindern, die entweder zu einem mangelhaften Ergebnis führen würde oder unnötig viel Energie, Wasser oder Waschmittel verbrauchen würde. Auf diese Weise kann auch das Verfärben oder Einlaufen von Wäschestücken verhindert werden. Wenn durch den Benutzer eine optimale Behandlung nicht gewünscht ist, kann beispielsweise aufgrund einer steuerungstechnischen Vorgabe nach der Warnung die Behandlung fortgesetzt oder abgebrochen werden.

Vorteilhafterweise sendet der Transponder die in ihm gespeicherten Informationen mittels elektromagnetischer Wellen an die Vorrichtung zum Auslesen der Informationen des Haushaltgerätes. Damit wird eine besonders störungsfreie und sichere Informationsübertragung sichergestellt, wobei der Transponder dann auch vollständig gekapselt und somit besonders widerstandsfähig ausgebildet werden kann. Da die Behandlungsräume in Wasch- oder Trockengeräten in der Regel aus Metall und somit elektromagnetisch gegen den Außenraum abgeschirmt sind, ist es auf diese Weise zusätzlich möglich, ausschließlich die Transponder der im Behandlungsraum befindlichen textilen Produkte auszulesen, die ja als einzige gewaschen oder getrocknet werden sollen.

Ferner ist es auch möglich, daß der Transponder die in ihm gespeicherten Informationen in Form von Lichtsignalen oder von akustischen Signalen an die Vorrichtung zum Auslesen der Informationen des Haushaltgerätes aussendet. Bei diesen beiden Übertragungsarten können die Signale sehr leicht abgeschirmt werden und auch deren Reichweite leicht angepaßt werden. Hierdurch kann verhindert werden, daß Interferenzen mit Signalen von anderen Geräten zu Störungen bei der Informationsübertragung aus dem Transponder führen.

Der Transponder enthält als Information über das textile Produkt beispielsweise die Produktart, die Gewebeart, Informationen über die Färbung (Farbton, chemische Bestandteile der Farbe, Färbungsprozeß), die minimale empfohlene oder maximal zuträgliche Behandlungstemperatur, das Gewicht, das Wasseraufnahmevermögen oder auch Behandlungseinschränkungen. Allgemein sollte der Transponder diejenigen Informationen enthalten, die für die beabsichtigte Behandlung von Bedeutung sind. So kann das Haushaltgerät zum einen die Zusammensetzung von Wäscheposten auf zu erwartende mangelhafte Pflegeergebnisse prüfen und andernfalls das optimale Wasch- oder Pflegeprogramm bzw. optimale Pflegeparameter einstellen.

Es ist auch möglich, das zu behandelnde textile Produkt mit mehreren Transpondern zu versehen, von denen jeweils einer nur die für einen Behandlungsvorgang relevanten Informationen enthält. Von dem entsprechenden Gerät werden dann nur die Informationen eingelesen, die für den von ihr ausgeübten Vorgang von Bedeutung sind. Ein ursprünglich nur für eine Behandlungsart mit einem Transponder ausgerüstetes textiles Produkt kann so für eine andere ggf. automatische Behandlung nachgerüstet werden.

Die Erfindung betrifft zur Durchführung des erfindungsgemäßen Verfahrens außerdem ein Haushaltgerät zum Waschen und/oder Trocken von textilen Produkten, die mit wenigstens einem maschinenlesbaren Transponder versehen sind, der Informationen über des textile Produkt enthält, wobei das Haushaltgerät mit wenigstens einer Vorrichtung zum Auslesen der Informationen über das textile Produkt ausgerüstet ist.

Ebenso bezieht sich die Erfindung auf einen Transponder mit wenigstens einem elektronischen Schaltkreis zur Kennzeichnung von textilen Produkten, der Informationen über das textile Produkt enthält, die für die Behandlung des textilen Produktes relevant sind. Insbesondere können dies beispielsweise die Gewebeart, Informationen über die Färbung, die minimale empfohlene oder maximal zuträgliche Behandlungstemperatur, das Gewicht, das Wasseraufnahmevermögen oder Behandlungseinschränkungen sein. Die Informationen im Transponder können sich auch direkt auf das Wasch- oder Trockenprogramm beziehen, beispielsweise durch konkrete Vorgaben des Programmablaufes. So können die einzelnen Programmschritte, deren Dauer und Abfolge bereits durch den Transponder vorgegeben werden.

Weitere Einzelheiten, Merkmale und Vorteile der vorliegenden Erfindung ergeben sich aus der nachfolgenden Beschreibung einer bevorzugten Ausführungsform zur Durchführung des erfindungsgemäßen Verfahrens unter Bezugnahme auf die Zeichnungen. In ihnen zeigen
- Fig. 1: ein zu behandelndes textiles Produkt,
- Fig. 2: einen Transponder zur Kennzeichnung des textilen Produktes gemäß Fig. 1 und
- Fig. 3: ein Haushaltgerät zum Waschen des textilen Produktes gemäß Fig. 1.

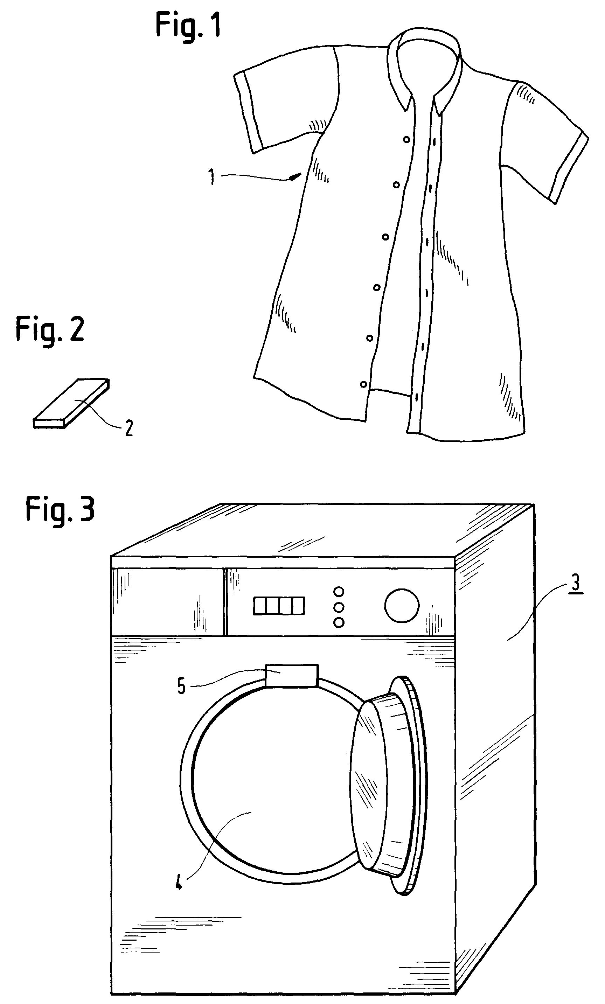

In Fig. 1 ist ein zu waschendes textiles Produkt 1 abgebildet, das in diesem Fall ein weißes Hemd aus Baumwolle sein soll. Dieses Hemd 1 soll voraussetzungsgemäß mit einem Transponder 2 versehen sein, wie er in Fig. 2 abgebildet ist. Der Transponder 2 ist mit einem elektronischen Schaltkreis ausgerüstet, der mittels elektromagnetischer Wellen Informationen über das textile Produkt 1 überträgt, wenn er seinerseits bestimmte elektromagnetische Abfrage-Signale empfängt. Die im Transponder 2 über das textile Produkt 1 gespeicherten Informationen können beispielweise die folgenden sein:
- Art des textilen Produktes:: Hemd
- Farbe:: weiß, gebleicht
- Gewebe:: Baumwolle
- Veredelungen:: keine
- Pflegeeinschränkungen:: keine
- Wasseraufnahmevermögen:: 1 Liter

In Fig. 3 schließlich ist ein Haushaltgerät 3 zum Waschen des textilen Produktes 1 abgebildet. Die Waschmaschine 3 ist intern mit einer Steuereinrichtung ausgerüstet (nicht dargestellt) und weist über der Beschickungsöffnung 4 eine Vorrichtung 5 zum Auslesen der Informationen über die textilen Produkte 1 auf, die mit einer ebenfalls nicht dargestellten, im Fensterrahmen der Beschickungsöffnung 4 angeordneten Ringantenne verbunden ist.

Zum Waschen wird nun das Hemd 1 durch die Beschickungsöffnung 4 in die Waschmaschine 3 eingebracht, wobei es an der Auslesevorrichtung 5 vorbeigeführt wird. Dabei sendet die Auslesevorrichtung 5 bestimmte elektromagnetische Abfrage-Signale aus, die den Transponder 2 im Hemd 1 dazu veranlassen, seinerseits die in ihm gespeicherten Informationen zu übertragen. Diese Signale vom Transponder 2 werden von der Auslesevorrichtung 5 empfangen und an die Steuereinrichtung der Waschmaschine 3 weitergeleitet. Wenn mehrere textile Produkte 1 zu waschen sind, wird dieser Vorgang entsprechend oft wiederholt. Die Steuerung überprüft zunächst bei mehreren zu waschenden textilen Produkten 1, ob für alle textilen Produkte 1 die Auswahl eines optimales Waschprogramms möglich ist. Falls dies nicht möglich ist, erfolgt eine akustische und/oder optische Warnung. Wenn aber eine optimale Behandlung für alle Wäschestücke 1 möglich ist, wählt die Steuerung der Waschmaschine 3 das optimale Programm aus und startet den entsprechenden Behandlungsvorgang.

Somit wird durch die erfindungsgemäße Lösung ein Verfahren zum Waschen und/oder Trocknen von textilen Produkten durch Haushaltgeräte geschaffen, bei dem das für die zu behandelnden textilen Produkte optimale Wasch- oder Trockenprogramm selbständig ausgewählt und eingestellt wird, wobei Bedienungsfehler ausgeschlossen werden. Zusätzlich findet eine Überprüfung der Zusammensetzung des Wäschepostens statt, um nachteilige Folgen bei ungünstiger Zusammensetzung zu vermeiden.

## Patentansprüche

1. Verfahren zum Behandeln von textilen Produkten durch Haushaltgeräte, wobei die textilen Produkte mit wenigstens einem maschinenlesbaren Transponder mit wenigstens einem elektronischen Schaltkreis versehen sind, der Informationen über das textile Produkt enthält, und wobei die Haushaltgeräte mit wenigstens einer Vorrichtung zum Auslesen der Informationen über das textile Produkt ausgerüstet sind, mit den folgenden Schritten:
- Einlesen der Informationen aus dem wenigstens einen Transponder der zu behandelnden textilen Produkte mittels der wenigstens einen Auslesevorrichtung in ein Haushaltgerät,
- Bestimmung der weiteren Behandlung der textilen Produkte entsprechend der eingelesenen Informationen durch das Haushaltgerät.

2. Verfahren nach Anspruch 1, dadurch gekennzeichnet, daß die Parameter der Behandlung entsprechend der eingelesenen Informationen durch das Haushaltgerät ausgewählt werden.

3. Verfahren nach Anspruch 1, dadurch gekennzeichnet, daß, wenn gemäß den ausgelesenen Informationen über die zu behandelnden textilen Produkte eine für alle Produkte optimale Behandlung nicht möglich ist, eine Warnung erfolgt.

4. Verfahren nach einem der vorstehenden Ansprüche, dadurch gekennzeichnet, daß der Transponder auf mindestens ein Abfragesignal der Vorrichtung des Haushaltgerätes zum Auslesen der Informationen die in ihm gespeicherten Informationen mittels elektromagnetischer Wellen an die Vorrichtung überträgt.

5. Verfahren nach einem der vorstehenden Ansprüche, dadurch gekennzeichnet, daß der Transponder die in ihm gespeicherten Informationen in Form von Lichtsignalen an die Vorrichtung zum Auslesen der Informationen des Haushaltgerätes aussendet.

6. Verfahren nach einem der vorstehenden Ansprüche, dadurch gekennzeichnet, daß der Transponder die in ihm gespeicherten Informationen in Form von akustischen Signalen an die Vorrichtung zum Auslesen der Informationen des Haushaltgerätes aussendet.

7. Verfahren nach einem der vorstehenden Ansprüche, dadurch gekennzeichnet, daß der Transponder als Information über das textile Produkt die Produktart, die Gewebeart, Informationen über die Färbung, die minimale empfohlene oder maximal zuträgliche Behandlungstemperatur, das Gewicht, das Wasseraufnahmevermögen oder Behandlungseinschränkungen enthält.

8. Verfahren nach einem der vorstehenden Ansprüche, dadurch gekennzeichnet, daß das zu waschende oder zu trocknende textile Produkt mit mehreren Transpondern versehen ist, von denen jeweils einer nur die für einen Behandlungsvorgang relevanten Informationen enthält.

9. Haushaltgerät zum Waschen und/oder Trocknen von textilen Produkten, die mit wenigstens einem maschinenlesbaren Transponder versehen sind, der Informationen über das textile Produkt enthält, wobei das Haushaltgerät mit wenigstens einer Vorrichtung zum Auslesen der Informationen über das textile Produkt ausgerüstet ist, zur Durchführung des Verfahrens nach einem der vorstehenden Ansprüche.

10. Transponder mit wenigstens einem elektronischen Schaltkreis zur Kennzeichnung von textilen Produkten, der Informationen über das textile Produkt enthält, die für das Waschen und/oder Trocknen des textilen Produktes relevant sind, insbesondere die Gewebeart, Informationen über die Färbung, die minimale empfohlene oder maximal zuträgliche Behandlungstemperatur, das Gewicht, das Wasseraufnahmevermögen oder Behandlungseinschränkungen.
